# EUROPEAN PATENT SPECIFICATION

(11) **EP 2 450 533 B1**
(45) Date of publication and mention of the grant of the patent: **30.03.2016**
(21) Application number: 11186408.8
(22) Date of filing: 24.10.2011
(51) Int. Cl.: F01D 9/02, F23R 3/60, F01D 11/04

(54) **Seal arrangement**
Dichtungsanordung
Dispositif d'étanchéité

(30) Priority: 09.11.2010 CH 18772010
(43) Date of publication of application: 09.05.2012
(73) Proprietor: ALSTOM Technology Ltd, 5400 Baden (CH)
(72) Inventor: Vassiliev, Vladimir, 5300 Turgi (CH); Magni, Fulvio, 5415 Nussbaumen (CH); Chernyshev, Sergey Anatolievich, 140005 Lubertsy (RU); Odinokov, Victor Vladimirovich, 119634 Moscow (RU)
(74) Representative: Pesce, Michele

(56) References cited:
- EP-A2- 2 058 475
- US-A1- 2005 262 845
- US-A1- 2010 077 761

## Description

### Field of technology

The present invention relates to a seal arrangement for a silo combustor.

### Prior art

A silo-type combustor usually comprises a combustion chamber, which is supplied with a fuel from above and compressed air, and a hot gas casing through which the hot combustion products are supplied from the combustion chamber to a turbine. The hot gases expand through the turbine.

The compressed air is supplied to the combustion chamber through an annular channel, which surrounds the combustor casing. The flow of hot gases and the flow of compressed air are therefore in opposing directions. The compressed air has further the function of cooling the combustor chamber casing and the hot gas casing.

The lower part of the combustion chamber is called the combustor inner liner (CIL). The combustor inner liner and the hot gas casing have an overlap, where the tip of the combustor inner liner is located inside of the upper part of the hot gas casing. In order to avoid mechanical contact and resulting fretting a gap is provided between the combustor inner liner and the hot gas casing. As the compressed air is at a higher pressure than the hot gases flowing through the combustor inner liner and the hot gas casing, the pressure difference would cause leakage of compressed air from the annular channel into the hot gas flow, thus reducing the amount of air available for combustion. A seal is therefore provided in the gap to prevent any leakage.

The seal consists of a set of segments, which may or may not overlap. A particular known seal design is called a belt seal. In this seal arrangement the segments are assembled circumferentially around the casing, whereby the individual segments are assembled with overlap and tightened by a spring. Their connection allows some movement relative to each other, and therefore they form a flexible structure, which accommodates the possible deformation of the combustor inner liner and the hot gas casing due to thermal expansion. Hooks welded onto the hot gas casing hold the belt seal segments. The interfaces between the seal segments are circumferentially located on the hot gas casing at the same positions as the hooks.

The belt seal structure accommodates a deformation of the combustor casing due to thermal expansion and a resulting variation in the radial gap between the combustor inner liner and the hot gas casing. The overlapping sections of the belt seal substantially prevent leakage past the seal in the axial direction. There are however still small gaps between the segments, which lead to leakages in the radial direction. The amount of leakage air is small and has no appreciable impact on the combustion air supply. These leakages can however, due to vortex formation, cause ingestion of hot gas into the gap between the combustor inner liner and the hot gas casing. This results in local overheating. This overheating may occur on the combustor inner liner as well as on the hot gas casing, in the same position where the holding hooks and the interface between the segments is located. These hot spots lead to increased oxidation and a reduced life of the combustor inner liner and of the hot gas casing.

US 2005/262845 discloses a gas turbine combustion liner having improved cooling and sealing, resulting in an extended component life. In an end region the combustion liner is provided with a seal system that seals against a transition duct, while admitting a cooling fluid to pass into an annular passage, formed between the combustion liner and said seal system. The seal system consists of a first spring seal with a first length and a number of axial slots and - adjacent to the first spring seal - a second spring seal with a second length and a number of slots, whereby the second spring seal is offset circumferentially from the first seal. The cooling fluid enters said annular passage through the axial slots of the first spring seal. From there the cooling fluid flows through cooling holes in the liner wall into the hot gas stream inside the combustion liner, thereby cooling the liner wall by convective cooling along its thickness and film cooling along the inner wall surface.
Measures how to prevent local overheating by ingestion of hot gases into the overlapping region between liner and casing are not explicitly disclosed.

It is therefore an object of the present invention to provide an improved seal arrangement for a silo combustor to reduce the local overheating associated with the ingestion of hot gas into the overlapping region between the combustor inner liner and the hot gas casing.

### Summary of the invention

The present invention addresses these problems.

According to the invention these problems are solved by providing a seal arrangement for a silo combustor having the features of claim 1. Preferred embodiments of the invention can be found in the dependent claims.

According to the invention a seal arrangement for a silo combustor comprises a first casing forming a passageway for a gas and a second casing forming a passageway for a gas, whereby an end portion of the first casing is positioned radially inside of and overlapped by an end portion of the second casing, whereby a segmented seal is positioned to seal a radial gap between the casings in the overlapping portion. The first casing is provided with openings in the region between two adjacent segments of the segmented seal, all the openings in said casing being located in the region between two adjacent segments of the segmented seal, all said openings being directly opposite a gap between two adjacent segments of the segmented seal and all said openings being only located in an axially extending region corresponding to the width of the segmented seal in an axial direction.

Cool air, which leaks through the gap between the adjacent segments of the segmented seal, will not cause a problem, if it can be directed appropriately without inducing ingestion of hot gas into the overlapping region of the first and second casing. By providing said openings in the first casing, air which leaks through the radial gap between two adjacent seal segments can flow radially through the opening in the first casing into the passageway for hot gases. As the leakage air flows directly into the hot gas path, vortex formation in the overlapping region of the first and second casing is minimized. Therefore local overheating of the first and second casings is prevented. Furthermore the provision of the opening allows the leakage air to flow into and mix with the axially flowing hot gas. This provides additional cooling of the casings.

According to a preferred embodiment the first casing is a combustor inner liner and the second casing is a hot gas casing.

The openings in the wall of the combustor inner liner in the region between two adjacent segments of the segmented seal enables compressed air, which leaks through gaps between the seal segments, to flow radially into the hot gas flow in the combustor.

The above and other objects, features and advantages of the invention will become more apparent from the following description of certain preferred embodiments thereof, when taken in conjunction with the accompanying drawings.

### Short description of the drawings

The invention is described referring to an embodiment depicted schematically in the drawings, and will be described with reference to the drawings in more detail in the following, where like elements are numbered alike.

The drawings show schematically in:
Figure 1 a silo combustor according to the invention;
Figure 2 a cross section of a seal arrangement according to the invention;
Figure 3 side views of a seal arrangement according to the invention, and
Figures 4a,4b a cross section of a prior art seal arrangement.

### Detailed description of preferred embodiments

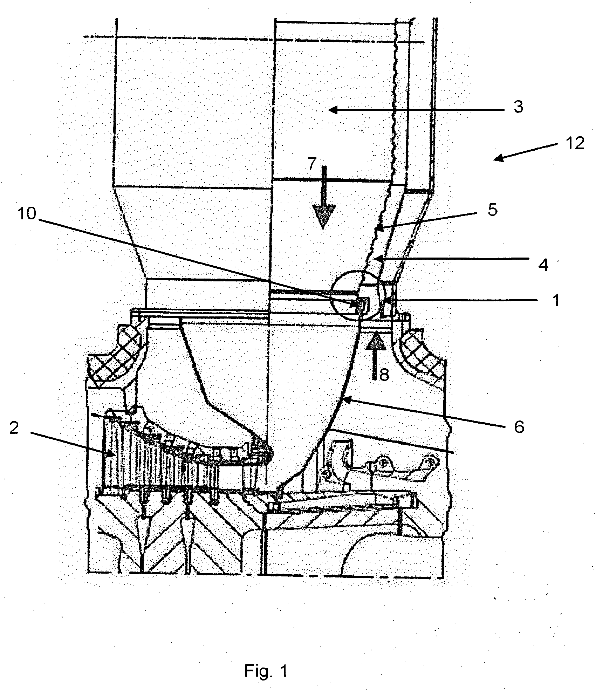

Referring to figure 1 a silo combustor 12 is shown. A silo-type combustor is supplied with compressed air and a fuel, whereby the combustion products in the combustor 12 are subsequently supplied to a turbine 2. The hot gases expand through and drive the turbine 2.

The compressed air for combustion is supplied through an annular channel 4, which surrounds the combustor casing 5, and upper part of casing 6. The flow of hot gases 7 and the flow of compressed air 8 are therefore in opposing directions, as can be seen in figure 1. These flows are substantially in the combustor 12 axial direction. The compressed air has further the function of cooling the combustor casings 5,6.

A first casing 5 of the combustor is called the combustor inner liner, which forms a lower part of the combustion chamber 3. A second casing 6 of the combustor is called a hot gas casing, which forms a passageway for supplying hot combustion gases to the turbine 2. The combustor inner liner 5 and the hot gas casing 6 have an overlap, where an end portion 19 of the combustor inner liner 5 is located inside of the upper part of the hot gas casing 6. A radial gap 9 is provided between the combustor inner liner 5 and the hot gas casing 6 in the overlapping region 10. This gap 9 is provided in order to avoid mechanical contact and resulting fretting between the combustor inner liner 5 and the hot gas casing 6. This mechanical contact would arise through deformation of the casings 5,6 due to thermal expansion.

The combustor inner liner 5 and the hot gas casing 6 are radially surrounded by the annular channel 4, which supplies compressed air to the combustor 12. As the compressed air in the channel 4 is at a higher pressure than the hot gases flowing through the combustor inner liner 5 and the hot gas casing 6, the pressure difference causes a leakage of compressed air into the hot gas flow 7, thus reducing the amount of air available for combustion. A segmented seal 11 is therefore provided in the radial gap 9 formed between the end portion of the combustor inner liner 5 and the end or upper portion of the hot gas casing 6 to minimize any leakage and to accommodate deformation of the casings 5, 6.

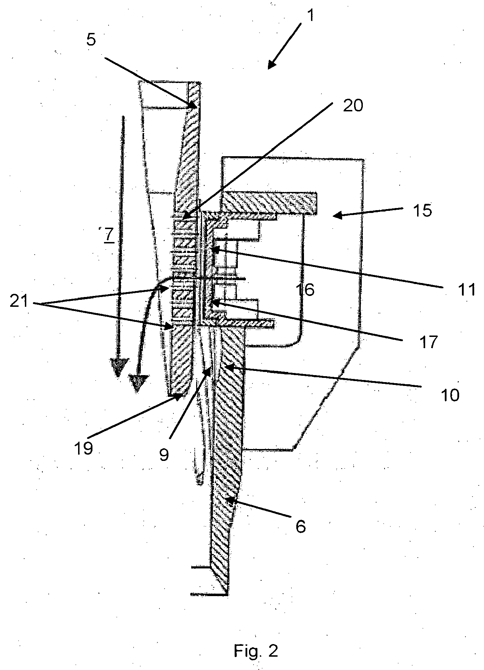

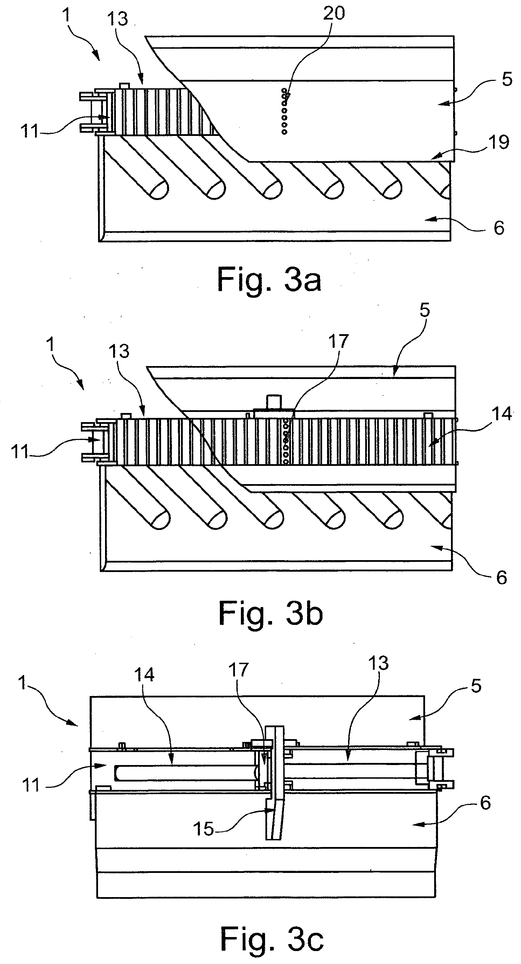

According to one embodiment of the invention a seal arrangement 1 for sealing this radial gap is shown schematically in Figs 2 and 3. In this seal arrangement 1 the seal segments are assembled circumferentially around the combustor inner liner 5, whereby the individual segments are assembled with or without overlap and tightened by a spring. This is known as a belt seal. In the figures 3a, 3b, 3c only two segments 13, 14 are shown. The connection of the segments 13, 14 allows some movement relative to each other. Therefore the segments 13, 14 form a flexible structure, which accommodates the possible deformation of the combustor inner liner 5 and the hot gas casing 6 due to thermal expansion. The seal segments 13, 14 are held by hooks 15 welded onto the hot gas casing. The interfaces 17 between the seal segments are circumferentially located on the combustor inner liner 5 at the same positions as hooks 15. In the figures 3a and 3b the seal arrangement 1 is viewed from inside the hot gas casing 6. A first 13 and second 14 seal segment, which form part of the segmented seal, are shown. In figure 3c the seal arrangement 1 is viewed from outside of the hot gas casing 6. A hook 15 is located at the interface between the first and second segment 13, 14 and is fixed to the hot gas casing 6.

The seal arrangement 1 accommodates a deformation of the combustor casing 5, 6 due to thermal expansion and a resulting variation in the radial gap between the combustor inner liner 5 and the hot gas casing 6. The overlapping sections of the seal 11 substantially prevent leakage past the segmented seal 11 in the axial direction. There are however still small gaps at the interface 17 between adjacent segments 13, 14, which lead to leakages in the radial direction as depicted by arrow 16 in figure 2. The amount of leakage air is small and has no appreciable impact on the combustion air supply. These leakages can however cause ingestion of hot gas into the gap 9 between the combustor inner liner 5 and the hot gas casing 6. This results in local overheating. This overheating may occur on the combustor inner liner 5 as well as on the hot gas casing 6, in the same position where the holding hooks 15 and the interface 17 between the segments 13, 14 are located. These hot spots lead to increased oxidation and a reduced life of the combustor inner liner and of the hot gas casing.

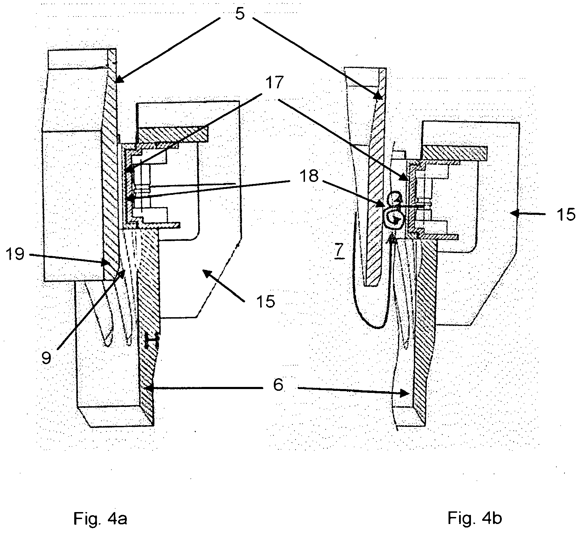

In figure 4a a cross section of a prior art seal arrangement is shown in order to explain the invention. A segmented seal 11 substantially closes the radial gap 9 between the combustor inner liner 5 and the hot gas casing 6. Figure 4b shows a similar cross section where the gap between the segmented seal 11 and the combustor inner liner 5 has been exaggerated for purposes of explanation. The leakage air through the radial gap at the interface 17 between adjacent seal segments hits the wall of the combustor inner liner 5 and creates a three-dimensional vortex flow 18. The vortices suck the hot gases into the overlapping region 10 resulting in local overheating.
Referring now to back to figures 2 and 3, according to one embodiment of the invention, the combustor inner liner 5 is provided with openings 20 in the region between two adjacent segments 13, 14 of the segmented seal 11. The openings 20 in the combustor inner liner 5 are located directly opposite the gap at the interface 17 between the segments 13, 14 through which compressed air may leak. The openings 20 allow the leaked compressed air to flow through the wall of the combustor inner liner 5 into the hot gas passage 6. As the leakage air flows directly into the hot gas path, vortex formation in the overlapping region 10 of the combustor inner liner 5 and the hot gas casing 6 is minimized. Therefore local overheating in this region is prevented. Furthermore, the provision of the openings 20 allows the leakage air to flow into and mix with the axially flowing hot gas 7. This provides additional cooling of the metal casings 5, 6, reducing oxidation and increasing the life of the components. The thermal distribution in the casings 5, 6 is homogenized due to the removal of the hot spots, which reduces deformation and reduces the risks of contact and fretting.

The segmented seal 11 is made up of a plurality of segments which surround the combustor inner liner 5 in the circumferential direction, whereby openings 20 in the combustor inner liner 5 are provided preferably directly opposite, each interface 17 between adjacent seal segments. The openings 20 may be in the form of a plurality of holes 21 extending radially through the combustor inner liner 5. The leaking compressed air would in this case be directed radially into the axially flowing hot gases 7, thereby increasing turbulence and mixing and thus cooling of the hot gases flowing through the combustor inner liner 5. The holes 21 may however have an axial and/or circumferential component, which would encourage film cooling of the combustor inner liner.

Alternatively the opening is in the form of a slot extending in the axial direction.

The holes 21 or slot should not extend further in the axial direction than the width of the segmented seal 11 in the axial direction.

The cross-sectional areas of the openings 20 are preferably designed such that the mass flow through the openings 20 is equal to the leakage flow rate through the interface 17 between two adjacent seal segments opposite the openings 20.

The invention is applicable to all seal arrangements whereby a conduit is made from two sections with an axially overlapping portion, whereby a seal is required to seal a radial gap between the two sections at the overlapping portion. Particularly, the description when referring to a combustor inner liner and hot gas casing is not limited thereto, but to a first and second casing accordingly forming a passageway.

The preceding description of the embodiments according to the present invention serves only an illustrative purpose and should not be considered to limit the scope of the invention. Particularly, in view of the preferred embodiments, different changes and modifications in the form and details can be made without departing from the scope of the invention. Accordingly the disclosure of the current invention should not be limiting. The disclosure of the current invention should instead serve to clarify the scope of the invention which is set forth in the following claims.

### List of reference numerals

- 1: Seal arrangement
- 2: Turbine
- 3: Combustion chamber
- 4: Annular channel
- 5: First casing
- 6: Second casing
- 7: Hot gas flow passage
- 8: Compressed air flow
- 9: Radial gap
- 10: Overlapping region
- 11: Segmented seal
- 12: Silo combustor
- 13: First seal segment
- 14: Second seal segment
- 15: Hook
- 16: Radial direction
- 17: Interfaces between segments
- 18: Vortex flow
- 19: End portion
- 20: At least one opening
- 21: Holes

## Claims

1. A seal arrangement (1) for a silo combustor comprising a combustion chamber (3), a first casing (5) forming a passageway (7) for a hot gas flow and a second casing (6) forming a passageway (7) for the hot gas flow, and an annular channel (4) forming a passageway for compressed air flow (8) and which surrounds the first casing (5) and the second casing (6), whereby an end portion (19) of the first casing (5) is positioned radially inside of an end portion of the second casing (6), the two casings (5, 6) forming an overlapping region (10), whereby a segmented seal (11) is positioned to seal a radial gap (9) formed between the first casing (5) and the second casing (6) in the overlapping region (10), **characterized in that** the first casing (5) is provided with openings (20), all the openings (20) in said casing (5) being located in the region between two adjacent segments (13, 14) of the segmented seal (11), all said openings (20) being directly opposite a gap between two adjacent segments (13, 14) of the segmented seal (11) and all said openings (20) being only located in an axially extending region corresponding to the width of the segmented seal (11) in an axial direction.

2. A seal arrangement (1) according to claim 1, **characterized in that** each of the openings (20) is formed by a plurality of holes (21) or a slot.

3. A seal arrangement according (1) to claim 1, **characterized in that** each of the openings (20) is a hole or a series of holes (21) which extend through the first casing (5) in a radial direction.

4. A seal arrangement according (1) to claim 1, **characterized in that** each of the openings (20) is a hole or a series of holes (21) which extend through the first casing (5) in radial and axial directions.

5. A seal arrangement (1) according to claim 1, **characterized in that** the first casing (5) and/or the second casing (6) is made out of metal.

6. A seal arrangement (1) according to claim 1, **characterized in that** the segmented seal (11) is a belt seal, comprising a plurality of connected segments (13, 14) and a spring for tightening the belt seal in the circumferential direction.

7. A seal arrangement (1) according to one of the preceding claims, **characterized in that** the cross-sectional area of each of the openings (20) is such that a mass flow of gas through the opening (20) is equal to a leakage flow rate through the gap between two adjacent segments (13, 14).

8. A seal arrangement (1) according to any of the preceding claims, whereby the first casing (5) is formed by a combustor inner liner and the second casing (6) is formed by a hot gas casing.

## Patentansprüche

1. Dichtungsanordnung (1) für eine Silo-Brennkammer, umfassend eine Brennkammer (3), ein erstes Gehäuse (5), das einen Durchgang (7) für einen Heißgasstrom bildet, und ein zweites Gehäuse (6), das einen Durchgang (7) für den Heißgasstrom bildet, und einen ringförmigen Kanal (4), der einen Durchgang für einen Druckluftstrom (8) bildet und das erste Gehäuse (5) und das zweite Gehäuse (6) umgibt, wobei ein Endabschnitt (19) des ersten Gehäuses (5) radial innerhalb eines Endabschnitts des zweiten Gehäuses (6) angeordnet ist, wobei die zwei Gehäuse (5, 6) einen Überschneidungsbereich (10) bilden, wobei eine segmentierte Dichtung (11) zum Abdichten eines radialen Spalts (9) positioniert wird, der zwischen dem ersten Gehäuse (5) und dem zweiten Gehäuse (6) im Überschneidungsbereich (10) gebildet wird, **dadurch gekennzeichnet, dass** das erste Gehäuse (5) mit Öffnungen (20) bereitgestellt ist, wobei alle Öffnungen (20) in dem Gehäuse (5) im Bereich zwischen zwei benachbarten Segmenten (13, 14) der segmentierten Dichtung (11) angeordnet sind, wobei alle Öffnungen (20) direkt gegenüber eines Spalts zwischen zwei benachbarten Segmenten (13, 14) der segmentierten Dichtung (11) angeordnet sind und alle Öffnungen (20), die nur in einem sich axial erstreckenden Bereich angeordnet sind, der Breite der segmentierten Dichtung (11) in axialer Richtung entsprechen.

2. Dichtungsanordnung (1) nach Anspruch 1, **dadurch gekennzeichnet, dass** jede der Öffnungen (20) durch eine Vielzahl von Löchern (21) oder einen Schlitz gebildet wird.

3. Dichtungsanordnung (1) nach Anspruch 1, **dadurch gekennzeichnet, dass** jede der Öffnungen (20) ein Loch oder eine Reihe von Löchern (21) ist, die sich durch das erste Gehäuse (5) in radialer Richtung erstrecken.

4. Dichtungsanordnung (1) nach Anspruch 1, **dadurch gekennzeichnet, dass** jede der Öffnungen (20) ein Loch oder eine Reihe von Löchern (21) ist, die sich durch das erste Gehäuse (5) in radialer und axialer Richtung erstrecken.

5. Dichtungsanordnung (1) nach Anspruch 1, **dadurch gekennzeichnet, dass** das erste Gehäuse (5) und/oder das zweite Gehäuse (6) aus Metall hergestellt sind.

6. Dichtungsanordnung (1) nach Anspruch 1, **dadurch gekennzeichnet, dass** die segmentierte Dichtung (11) eine Banddichtung ist, die mehrere verbundene Segmente (13, 14) und eine Feder zum Anziehen der Banddichtung in Umfangsrichtung umfasst.

7. Dichtungsanordnung (1) nach einem der vorhergehenden Ansprüche, **dadurch gekennzeichnet, dass** der Querschnittsbereich jeder der Öffnungen (20) derart ist, dass ein Massenstrom des Gases durch die Öffnung (20) gleich einer Leckströmungsrate durch den Spalt zwischen zwei benachbarten Segmenten (13, 14) ist.

8. Dichtungsanordnung (1) nach einem der vorhergehenden Ansprüche, wobei das erste Gehäuse (5) von einer inneren Brennkammerauskleidung ausgebildet ist und das zweite Gehäuse (6) von einem Heißgasgehäuse ausgebildet ist.

## Revendications

1. Agencement (1) de joint pour un brûleur en silo comportant une chambre (3) de combustion, un premier carter (5) formant un passage (7) pour un écoulement de gaz chauds et un deuxième carter (6) formant un passage (7) pour l'écoulement de gaz chauds, et un conduit annulaire (4) formant un passage pour un écoulement (8) d'air comprimé et qui entoure le premier carter (5) et le deuxième carter (6), une partie (19) d'extrémité du premier carter (5) étant ainsi positionnée radialement à l'intérieur d'une partie d'extrémité du deuxième carter (6), les deux carters (5, 6) formant une région (10) de chevauchement, un joint segmenté (11) étant ainsi positionné de façon à obturer un interstice radial (9) formé entre le premier carter (5) et le deuxième carter (6) dans la région (10) de chevauchement, **caractérisé en ce que** le premier carter (5) est doté d'ouvertures (20), toutes les ouvertures (20) dans ledit carter (5) étant situées dans la région comprise entre deux segments adjacents (13, 14) du joint segmenté (11), toutes lesdites ouvertures (20) se trouvant directement en face d'un interstice entre deux segments adjacents (13, 14) du joint segmenté (11) et toutes lesdites ouvertures (20) étant uniquement situées dans une région s'étendant axialement correspondant à la largeur du joint segmenté (11) dans une direction axiale.

2. Agencement (1) de joint selon la revendication 1, **caractérisé en ce que** chacune des ouvertures (20) est formée par une pluralité de trous (21) ou une fente.

3. Agencement (1) de joint selon la revendication 1, **caractérisé en ce que** chacune des ouvertures (20) est un trou ou une série de trous (21) qui s'étendent à travers le premier carter (5) dans une direction radiale.

4. Agencement (1) de joint selon la revendication 1, **caractérisé en ce que** chacune des ouvertures (20) est un trou ou une série de trous (21) qui s'étendent à travers le premier carter (5) dans des directions radiale et axiale.

5. Agencement (1) de joint selon la revendication 1, **caractérisé en ce que** le premier carter (5) et/ou le deuxième carter (6) sont constitués de métal.

6. Agencement (1) de joint selon la revendication 1, **caractérisé en ce que** le joint segmenté (11) est un joint en courroie, comportant une pluralité de segments (13, 14) liés et un ressort servant à serrer le joint en courroie dans la direction circonférentielle.

7. Agencement (1) de joint selon l'une des revendications précédentes, **caractérisé en ce que** l'aire en section droite de chacune des ouvertures (20) est telle qu'un débit massique de gaz à travers l'ouverture (20) est égal à un débit de fuite à travers l'interstice entre deux segments adjacents (13, 14).

8. Agencement (1) de joint selon l'une quelconque des revendications précédentes, le premier carter (5) étant formé par un revêtement intérieur de brûleur et le deuxième carter (6) étant formé par un carter pour gaz chauds.
